# FASCICULE DE BREVET EUROPEEN

(11) **EP 1 569 828 B1**
(45) Date de publication et mention de la délivrance du brevet: **15.04.2009**
(21) Numéro de dépôt: 03799532.1
(22) Date de dépôt: 03.12.2003
(51) Int. Cl.: B60R 25/02

(54) **ANTIVOL POUR VEHICULE AUTOMOBILE NOTAMMENT DE TYPE ELECTRONIQUE**
DIEBSTAHLVORRICHTUNG, INSBESONDERE EINE ELEKTRONISCHE, FÜR EIN KRAFTFAHRZEUG
ANTI-THEFT DEVICE FOR A MOTOR VEHICLE, SUCH AS AN ELECTRONIC ANTI-THEFT DEVICE

(30) Priorité: 06.12.2002 FR 0215467
(43) Date de publication de la demande: 07.09.2005
(73) Titulaire: Valeo Sécurité Habitacle S.A.S., 94042 Créteil cedex (FR)
(72) Inventeur: FLANDRINCK, Christian, F-58240 St Pierre le Moutier (FR)
(74) Mandataire: Rosolen-Delarue, Katell
(86) Numéro de dépôt international: PCT/EP2003/050934
(87) Numéro de publication internationale: WO 2004/052698

(56) Documents cités:
- EP-A- 0 336 219
- EP-A- 1 106 452
- EP-A- 1 228 932

## Description

La présente invention concerne un antivol pour véhicule automobile notamment de type électronique.

On connaît déjà dans l'état de la technique un antivol pour véhicule automobile du type comprenant :
- un stator,
- un rotor monté rotatif dans le stator entre une première position angulaire extrême dite position "stop" et au moins une seconde position angulaire, et
- de moyens d'interruption de la course de retour du rotor, depuis la seconde position vers la position "stop", dans une position dite "anti-retour" intercalée angulairement entre ces seconde position et position "stop", ces moyens d'interruption étant désactivables électriquement.

EP 0 336 219 décrit un antivol pour véhicule automobile du type comprenant :
- un stator 3,
- un rotor 7 monté rotatif dans le stator entre une première position angulaire extrême dite position « LOCK « et au moins une seconde position angulaire, et
- des moyens d'interruption de la course de retour du rotor 7, depuis la seconde position vers la position « LOCK », dans une position dite « ACC » intercalée angulairement entre ces seconde position et position « LOCK ».

Lorsque le véhicule est en marche, le solénoïde 24 (« activable et désactivable électriquement ») est activé et empêche la poussée du bouton de pression 19, assurant l'actionnement des moyens d'interruption de la course du rotor dans la position « ACC ». Lorsque le véhicule est à l'arrêt, le solénoïde 24 électromagnétique est désactivé et déverrouille le bouton à pression 19 qui peut être poussé et permettre la rotation du rotor de la position « ACC » à la position « LOCK ».

Cet antivol comprend donc des moyens mécaniques (bouton 19) de désactivation des moyens d'interruption de course de retour du rotor 7.

Un antivol de type électronique présente avantageusement les caractéristiques ci-dessus.

Un antivol électronique comporte généralement un bouton de commande, solidaire en rotation du rotor, formant un organe de commande manuelle du démarrage d'un moteur du véhicule et du verrouillage d'une colonne de direction du véhicule.

Dans le but d'autoriser le déverrouillage de la colonne de direction, un antivol électronique comporte un dispositif électronique d'identification constitué notamment d'un identifiant électronique, porté par un utilisateur du véhicule autorisé, et d'une unité d'identification de cet utilisateur autorisé, embarquée à bord du véhicule. L'identifiant électronique peut présenter, par exemple, l'aspect d'une clé ou d'un badge.

Dans le but de commander le démarrage du moteur, l'antivol électronique comporte un commutateur électrique à plusieurs positions, solidaire en rotation du rotor. Ce commutateur permet de commander le démarrage du moteur. En effet, le bouton de commande peut être placé successivement dans une première position angulaire extrême de repos, dite position "stop", une position angulaire intermédiaire, dite position "marche", et une seconde position angulaire extrême, opposée à la première position extrême, dite position "démarrage". Partant de la position "stop", la course angulaire du bouton de commande est par exemple d'environ 90° pour atteindre la position "marche" et d'environ 130° pour atteindre la position "démarrage".

On notera que, généralement, le verrouillage de la colonne de direction n'est rendu possible que lorsque le bouton de commande et le rotor sont dans la position "stop".

Certaines réglementations imposent que, dans un véhicule du type à boite de vitesses automatique, le retour du bouton de commande (solidaire en rotation du rotor), depuis sa position "marche" vers sa position "stop", soit interdit tant que le sélecteur de botte de vitesses n'est pas replacé en position "parking". L'utilisateur est ainsi averti de cette situation.

Les moyens d'interruption de la course de retour du rotor permettent de satisfaire cette réglementation en permettant de bloquer le rotor dans la position "anti-retour" qui est située par exemple à 45° de la position "stop".

Les moyens d'interruption de la course de retour du rotor comprennent généralement un électroaimant, porté par le stator, muni d'une tige (plongeur) déplaçable entre une position saillante, dans laquelle cette tige est susceptible d'être en prise avec le rotor pour l'immobiliser, et une position escamotée dans laquelle cette tige est dégagée du rotor. La tige est rappelée élastiquement vers sa position saillante par des moyens mécaniques. La tige est sollicitée vers sa position escamotée, à l'encontre de sa force de rappel, par alimentation électrique de l'électroaimant. En l'absence d'alimentation électrique de l'électroaimant, la tige est donc rappelée élastiquement en position saillante.

Toutefois, en l'absence d'alimentation électrique de l'électroaimant, le rotor n'est immobilisé par la tige de cet électroaimant que si cette tige est alignée avec un orifice correspondant d'emboîtement de la tige, ménagé dans le rotor.

Ainsi, le rotor comporte habituellement un orifice "anti-retour" dans lequel s'emboîte automatiquement la tige de l'électroaimant lorsque le rotor est dans la position "anti-retour" et le sélecteur de botte de vitesses automatique n'est pas dans sa position "parking".

Le rotor peut également comporter un autre orifice d'emboîtement de la tige de l'électroaimant lorsque le rotor est dans la position "stop" et un utilisateur autorisé n'est pas reconnu par le dispositif d'identification, afin de bloquer le rotor dans cette position "stop".

Par souci de standardisation par limitation du nombre de type d'antivol, un antivol électronique comportant la fonction décrite ci-dessus de blocage du rotor en position "anti-retour" peut être installé dans un véhicule équipé d'une transmission à boite de vitesses non automatique. Dans ce cas, cette fonction n'est pas exploitée.

Néanmoins, que antivol équipe un véhicule muni d'une boîte de vitesses automatique ou non, en cas de défaillance électrique empêchant l'alimentation électrique de l'électroaimant, lorsque l'utilisateur déplace le bouton de commande de sa position "marche" vers sa position "stop", la tige de l'électroaimant, rappelée élastiquement en position saillante, s'emboîte automatiquement dans l'orifice "anti-retour" du rotor afin de bloquer le bouton de commande et le rotor en position "anti-retour".

Or, certaines réglementations exigent que, malgré la défaillance électrique ci-dessus et l'impossibilité d'alimenter l'électroaimant normalement, on puisse replacer le bouton de commande en position "stop" afin de pouvoir verrouiller la colonne de direction et protéger le véhicule contre le vol.

L'invention a pour but de proposer un antivol du type précité permettant notamment, dans un contexte de défaillance électrique de l'antivol ou de son alimentation électrique, de replacer le bouton de commande en position "stop" après blocage de ce bouton de commande en position "anti-retour".

A cet effet, l'invention a pour objet un antivol pour véhicule automobile, du type précité, **caractérisé en ce qu**'il comprend des moyens mécaniques de désactivation des moyens d'interruption de course de retour du rotor.

Les moyens mécaniques de désactivation des moyens d'interruption de course de retour du rotor permettent, dans un contexte de défaillance électrique de l'antivol ou de son alimentation électrique, de replacer le rotor en position "stop" après blocage de ce rotor en position "anti-retour".

Suivant d'autres caractéristiques optionnelles de cet antivol :
- les moyens d'interruption de course de retour du rotor comprennent des butées complémentaires d'interruption de course portées respectivement par le rotor et une tige mobile en translation d'un électroaimant porté par le stator ;
- les moyens mécaniques de désactivation des moyens d'interruption de course de retour du rotor sont portés par ce rotor ;
- les moyens mécaniques de désactivation des moyens d'interruption de course de retour du rotor comprennent un organe de manoeuvre monté mobile en translation dans le rotor sensiblement parallèlement à la tige de l'électroaimant ;
- l'organe de manoeuvre est agencé dans un logement sensiblement axial ménagé dans le rotor, ce logement communiquant avec l'extérieur du rotor pour permettre l'introduction dans le rotor d'un organe de d'actionnement de l'organe de manoeuvre, présentant par exemple l'aspect d'une clé ;
- les moyens mécaniques de désactivation des moyens d'interruption de course de retour du rotor comprennent une bascule, montée articulée dans le rotor autour d'un axe sensiblement orthogonal aux directions de déplacement de la tige d'électroaimant et de l'organe de manoeuvre, cette bascule comportant un premier bras destiné à coopérer avec l'organe de manoeuvre et un second bras destiné à coopérer avec la tige d'électroaimant ;
- l'organe de manoeuvre est rappelé élastiquement vers une position écartée de la bascule ;
- le rotor comprend un organe tubulaire, délimitant le logement de l'organe de manoeuvre, muni d'une extrémité distale, solidaire en rotation d'un disque portant la bascule, et d'une extrémité proximale portant un bouton de commande du rotor ;
- le bouton de commande est muni d'un perçage sensiblement axial pour le passage de l'organe d'actionnement de l'organe de manoeuvre ;
- le rotor est déplaçable entre la position "stop" et une seconde position angulaire extrême dite position "démarrage", le rotor pouvant être placé, entre ses positions "stop" et "démarrage", dans une position angulaire intermédiaire, dite position "marche", la position "anti-retour" étant placé entre les positions "stop" et "marche".

L'invention sera mieux comprise à la lecture de la description qui va suivre, donnée uniquement à titre d'exemple et faite en se référant aux dessins dans lesquels :
- la figure 1 est une vue en perspective, avec une coupe partielle, d'un antivol selon l'invention ;
- les figures 2 à 4 sont des vues en perspective de certaines parties seulement de l'antivol représenté sur la figure 1, montrant cet antivol dans différentes configurations de fonctionnement.

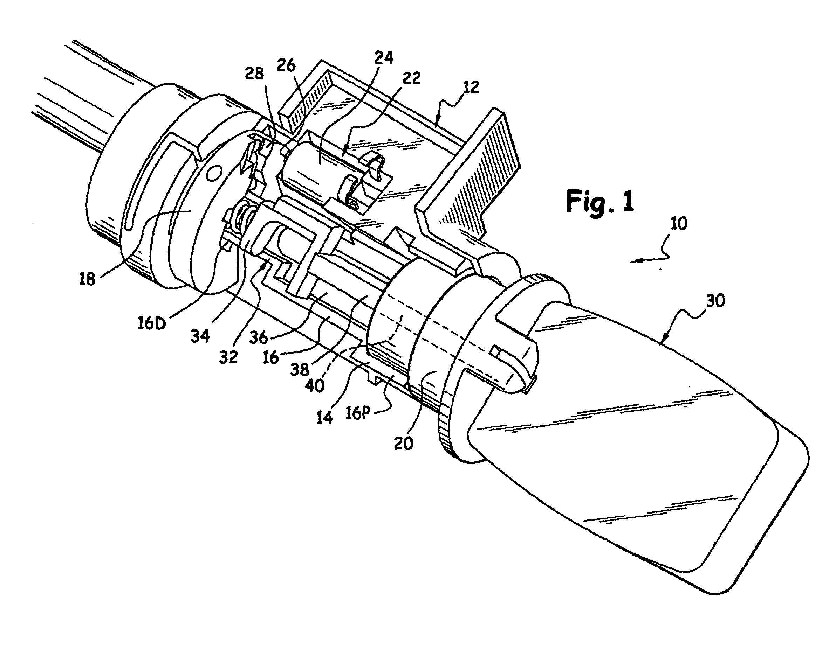

On a représenté sur la figure 1 un antivol électronique pour véhicule automobile, selon l'invention, désigné par la référence générale 10. Cet antivol 10 est destiné à commander le démarrage d'un moteur du véhicule et le verrouillage d'une colonne de direction du véhicule.

Dans l'exemple illustré, l'antivol 10 est de type électronique et équipe un véhicule muni d'une botte de vitesse automatique.

L'antivol 10 comprend un stator 12 et un rotor 14 monté rotatif dans le stator 12. Dans l'exemple illustré, le rotor 14 comprend un organe tubulaire 16 muni d'une extrémité distale 16D, solidaire en rotation d'un disque 18, et d'une extrémité proximale 16B portant un bouton 20 de commande du rotor.

Le bouton de commande 20 est couplé en rotation avec l'extrémité proximale 16B de l'organe tubulaire 16 à l'aide de moyens classiques.

Dans le but de commander le démarrage du moteur du véhicule, le rotor 14 est couplé à un commutateur électrique tournant à plusieurs positions. Ce commutateur est de type classique.

Ainsi, le rotor 14 et le bouton de commande 20 peuvent être placés successivement dans une première position angulaire extrême de repos, dite position "stop", une position angulaire intermédiaire, dite position "marche" et une seconde position angulaire extrême, opposée à la première position extrême, dite position "démarrage". Partant de la position "stop", la course angulaire du rotor 14 et du bouton de commande 20 est par exemple d'environ 90° pour atteindre la position "marche" et d'environ 130° pour atteindre la position "démarrage".

En variante, le rotor 14 et le bouton de commande 20 pourraient être placés dans plus d'une seule position angulaire intermédiaire.

L'antivol 10 comprend des moyens 22 d'interruption de la course de retour du rotor 14 et du bouton de commande 20 depuis la position "marche" vers la position "stop". Ces moyens 22 permettent d'interrompre cette course de retour dans une position dite "anti-retour" intercalée angulairement entre les positions "marche" et "stop". Cette position "anti-retour" est donc une position d'interruption de la course du rotor 14 et du bouton de commande 20 lorsque ces derniers se déplacent depuis la position "marche" vers la position "stop" si bien qu'ils ne peuvent atteindre cette position "stop" tant que les moyens 22 ne sont pas neutralisés.

Dans l'exemple illustré, les moyens 22 d'interruption de la course de retour du rotor 14 comprennent un électroaimant 24, porté par le stator 12, muni d'une tige 26 (plongeur) déplaçable en translation entre une position saillante, dans laquelle cette tige 26 est susceptible d'être en prise avec le disque 18 pour l'immobiliser, et une position escamotée, dans laquelle cette tige 26 est écartée du disque 18.

De façon classique, la tige 26 est rappelée élastiquement vers sa position saillante par des moyens mécaniques comprenant généralement un ressort. La tige 26 est sollicitée vers sa position escamotée, à l'encontre de sa force de rappel, par alimentation électrique de l'électroaimant.

Les moyens 22 d'interruption de la course de retour du rotor 16 sont donc désactivables électriquement. En l'absence d'alimentation électrique de l'électroaimant 24, la tige 26 est rappelée élastiquement en position saillante.

Les moyens 22 d'interruption de la course de retour du rotor 14 comprennent également un orifice "anti-retour" 28, ménagé dans le disque 18, dans lequel s'emboîte automatiquement la tige 26 en position saillante lorsque, comme il est habituel, le rotor 14 est dans la position "anti-retour" et le sélecteur de boîte de vitesses automatique n'est pas dans sa position "parking".

On notera donc que la tige 26 et l'orifice "anti-retour" 28 forment des butées complémentaires d'interruption de la course de retour du rotor 14 vers la position "stop"

Généralement, le verrouillage de la colonne de direction n'est rendu possible que lorsque le rotor 14 et le bouton de commande 20 sont dans la position "stop".

Dans le but d'autoriser le déverrouillage de la colonne de direction, l'antivol 10 comporte généralement un dispositif électronique d'identification constitué notamment d'un identifiant électronique, porté par l'utilisateur autorisé du véhicule, et d'une unité d'identification de cet utilisateur autorisé, embarquée à bord du véhicule. L'identifiant électronique peut présenter, par exemple, l'aspect d'une clé 30 telle que représentée sur la figure 1.

En plus de l'orifice "anti-retour", le disque 18 peut comporter un autre orifice, dit orifice "stop", dans lequel s'emboîte la tige 26 de l'électroaimant lorsque le rotor 14 et le bouton de commande 20 sont dans la position "stop" et un utilisateur autorisé n'est pas reconnu par le dispositif d'identification, ceci afin de bloquer le rotor 14 et le bouton de commande 20 dans la position "stop".

Conformément à l'invention, l'antivol 10 comprend des moyens mécaniques 32 de désactivation des moyens 22 d'interruption de la course de retour du rotor 14. De préférence, ces moyens 32 sont portés par le rotor 14.

Dans l'exemple illustré, les moyens 32 de désactivation des moyens 22 d'interruption de course de retour du rotor 14 comprennent un organe de manoeuvre 34 monté mobile en translation dans le rotor 14, sensiblement parallèlement à la tige 26 de l'électroaimant.

Plus particulièrement, on notera que l'organe tubulaire 16 délimite un logement 36 sensiblement axial dans lequel est agencé et guidé l'organe de manoeuvre 34.

Le logement 36 communique avec l'extérieur du rotor 14 pour permettre l'introduction dans ce rotor 14 d'un organe d'actionnement de l'organe de manoeuvre 34. Dans l'exemple illustré, cet organe d'actionnement est constitué par un panneton 38 de la clé 30.

On notera que le bouton de commande 20 est muni d'un perçage 40 sensiblement axial pour le passage du panneton 38 destiné à coopérer avec l'organe de manoeuvre 34.

De préférence, les moyens 32 de désactivation des moyens 22 d'interruption de course de retour du rotor 14 comprennent une bascule 42, montée articulée sur le disque 18 autour d'un axe sensiblement orthogonal aux directions de déplacement de la tige 26 d'électroaimant et de l'organe de manoeuvre 34.

Cette bascule 42 comporte un premier bras 42A destiné à coopérer avec l'organe de manoeuvre et un second bras 42B destiné à coopérer avec la tige 26 d'électroaimant pour la déplacer vers sa position escamotée.

On notera que l'organe de manoeuvre 34 est rappelé élastiquement vers une position écartée de la bascule 42 par un ressort 44.

La bascule 42 est positionnée sur le disque 18 de manière que le second bras 42B soit sensiblement dans le prolongement axial de la tige 26 d'électroaimant lorsque le rotor 14 et le bouton de commande 20 sont dans la position "anti-retour" qui est située, par exemple, à 45° de la position "stop".

On notera que le second bras 42B de la bascule est susceptible de se déplacer sensiblement axialement à travers l'orifice "anti-retour" 28 de façon à dégager de cet orifice 28 la tige 26 d'électroaimant.

On décrira ci-dessous les principaux aspects du fonctionnement de l'antivol 10 liés à l'invention.

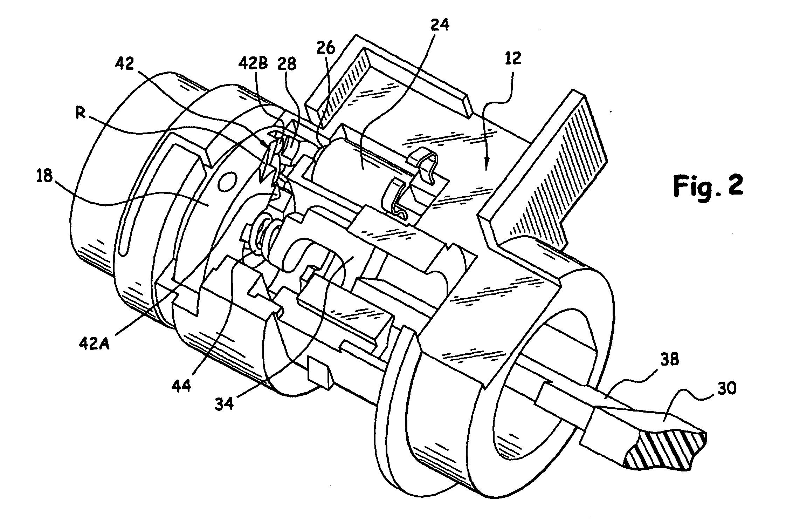

On considère initialement le rotor 14 et le bouton de commande 20 en position "stop" comme cela est représenté sur les figures 1 et 2.

Normalement, contrairement à ce qui est représenté sur les figures, la clé 30 n'est pas introduite dans le rotor 14.

Un utilisateur autorisé souhaitant faire démarrer le véhicule, déplace tout d'abord le bouton de commande 20 et le rotor 14 vers la position "marche". L'électroaimant 24 n'étant pas alimenté, sa tige 26 est rappelée élastiquement en position saillante dans laquelle elle coopère avec une face en regard du disque 18. Au cours de la course angulaire de ce disque 18 de la position "stop" vers la position "marche", la tige 26 s'emboîte automatiquement dans l'orifice "anti-retour" 28 puis s'en dégage en coopérant avec une rampe R prolongeant angulairement cet orifice 28.

En prolongeant ensuite la course angulaire du bouton de commande 20 et du rotor 14 jusqu'à la position "démarrage" l'utilisateur peut faire démarrer le véhicule.

Après démarrage du véhicule, le bouton de commande 20 est rappelé élastiquement, de façon connue en soi, vers sa position "marche".

On considère que, par la suite, survient une défaillance électrique empêchant notamment l'alimentation électrique de l'électroaimant 24.

Lorsque l'utilisateur tente de ramener le bouton de commande 20 et le rotor 14 de la position "marche" jusqu'à la position "stop", la tige 26 d'électroaimant, rappelée élastiquement en position saillante, s'emboîte automatiquement dans l'orifice "anti-retour" 28 de façon à immobiliser, par l'intermédiaire du disque 18, le rotor 14 et le bouton de commande 20 en position "anti-retour".

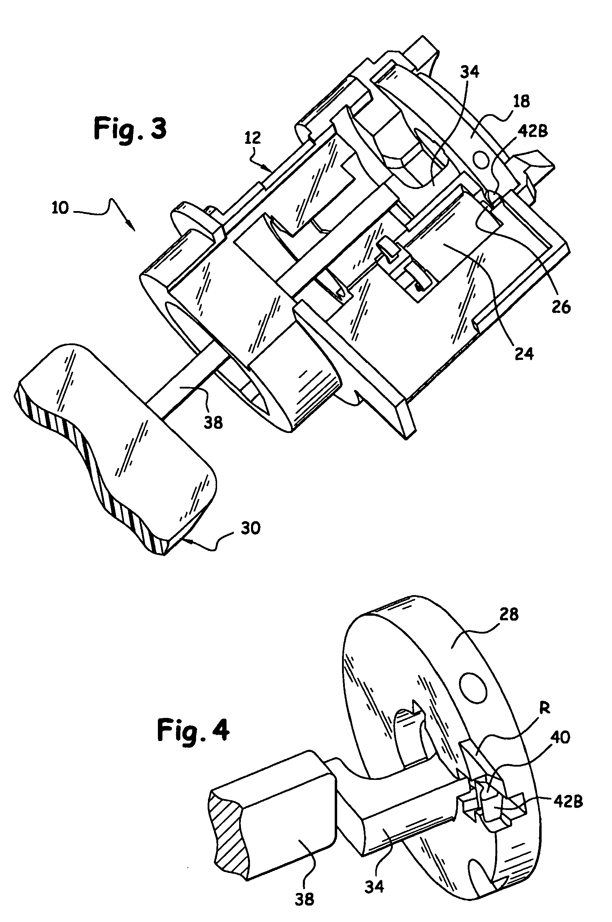

Pour pouvoir replacer le rotor 14 et le bouton de commande 20 en position "stop", l'utilisateur introduit le panneton 38 dans le perçage 40 du bouton de commande 20. Ce panneton 38 sollicite alors l'organe de manoeuvre 34 à l'encontre de la force de rappel du ressort 44. Cet organe de manoeuvre 34 coopère ainsi avec le premier bras 42A de la bascule, de façon que le second bras 42B de cette bascule sollicite la tige 26 d'électroaimant à l'encontre de sa force élastique de rappel et dégage cette tige 26 de l'orifice "anti-retour" 28, comme cela est représenté sur les figures 3 et 4.

Le déplacement du rotor 14 vers la position "stop" est alors redevenu possible si bien que l'utilisateur peut placer ce rotor 14 en position "stop" afin notamment de permettre le verrouillage de la colonne de direction.

## Revendications

1. Antivol pour véhicule automobile du type comprenant :
- un stator (12),
- un rotor (14) monté rotatif dans le stator (12) entre une première position angulaire extrême dite position "stop" et au moins une seconde position angulaire, et
- de moyens (22) d'interruption de la course de retour du rotor (14), depuis la seconde position vers la position "stop", dans une position dite "anti-retour" intercalée angulairement entre ces seconde position et position "stop", ces moyens (22) d'interruption étant désactivables électriquement,
- des moyens mécaniques (32) de désactivation des moyens (22) d'interruption de course de retour du rotor (14),
**caractérisé en ce que** lesdits moyens mécaniques (32) de désactivation des moyens (22) d'interruption de course de retour du rotor (14) sont portés par ce rotor (14).

2. Antivol selon la revendication 1, **caractérisé en ce que** les moyens (22) d'interruption de course de retour du rotor (14) comprennent des butées complémentaires (28, 26) d'interruption de course portées respectivement par le rotor (14) et une tige (26) mobile en translation d'un électroaimant (24) porté par le stator (12).

3. Antivol selon les revendications 1 et 2 prises ensemble, **caractérisé en ce que** les moyens mécaniques (32) de désactivation des moyens (22) d'interruption de course de retour du rotor (14) comprennent un organe de manoeuvre (34) monté mobile en translation dans le rotor (14) sensiblement parallèlement à la tige (26) de l'électroaimant.

4. Antivol selon la revendication 3, **caractérisé en ce que** l'organe de manoeuvre (34) est agencé dans un logement (36) sensiblement axial ménagé dans le rotor (14), ce logement (36) communiquant avec l'extérieur du rotor (14) pour permettre l'introduction dans le rotor (14) d'un organe de d'actionnement de l'organe de manoeuvre (34), présentant par exemple l'aspect d'une clé (30, 38).

5. Antivol selon la revendication 3 ou 4, **caractérisé en ce que** les moyens mécaniques (32) de désactivation des moyens (22) d'interruption de course de retour du rotor (14) comprennent une bascule (42), montée articulée dans le rotor (14) autour d'un axe sensiblement orthogonal aux directions de déplacement de la tige (26) d'électroaimant et de l'organe de manoeuvre (34), cette bascule (42) comportant un premier bras (42A) destiné à coopérer avec l'organe de manoeuvre (34) et un second bras (42B) destiné à coopérer avec la tige (26) d'électroaimant.

6. Antivol selon la revendications 5, **caractérisé en ce que** l'organe de manoeuvre (34) est rappelé élastiquement vers une position écartée de la bascule (42).

7. Antivol selon la revendication 5 ou 6, **caractérisé en ce que** le rotor (14) comprend un organe tubulaire (16), délimitant le logement (36) de l'organe de manoeuvre (34), muni d'une extrémité distale (16D), solidaire en rotation d'un disque (18) portant la bascule (42), et d'une extrémité proximale (16P) portant un bouton (20) de commande du rotor (14).

8. Antivol selon les revendications 4 et 7 prises ensemble, **caractérisé en ce que** le bouton (20) de commande est muni d'un perçage (40) sensiblement axial pour le passage de l'organe (38) d'actionnement de l'organe de manoeuvre (34).

9. Antivol selon l'une quelconque des revendications précédentes, **caractérisé en ce que** le rotor (14) est déplaçable entre la position "stop" et une seconde position angulaire extrême dite position "démarrage", le rotor (14) pouvant être placé, entre ses positions "stop" et "démarrage", dans une position angulaire intermédiaire, dite position "marche", la position "anti-retour" étant placé entre les positions "stop" et "marche".

## Claims

1. Antitheft device for an automobile vehicle of the type comprising:
- a stator (12),
- a rotor (14) installed free to rotate in the stator (12) between a first extreme angular position called the "stop" position and at least one second angular position, and
- means (22) for interrupting the return movement of the rotor (14), from the second position to the "stop" position, in a so-called "non-return" position inserted at an angle between this second position and the "stop" position, it being possible to deactivate these interruption means (22) electrically,
- mechanical means (32) for deactivating the means (22) of interrupting the return movement of the rotor (14),
**characterised in that** said mechanical means (32) for deactivating the means (22) of interrupting the return movement of the rotor (14) are supported by this rotor (14).

2. Antitheft device according to claim 1, **characterised in that** the means (22) of interrupting the return movement of the rotor (14) comprise complementary stops (28, 26) to interrupt movement, supported by the rotor (14) and a rod (26) of an electromagnet (24) supported by the stator (12) and free to move in translation, respectively.

3. Antitheft device according to claims 1 and 2 combined, **characterised in that** the mechanical means (32) for deactivating the means (22) of interrupting the return movement of the rotor (14) comprise a control device (34) mounted free to move in translation in the rotor (14) approximately parallel to the rod (26) of the electromagnet.

4. Antitheft device according to claim 3, **characterised in that** the control device (34) is arranged in a housing (36) approximately in the axial direction formed in the rotor (14), this housing (36) communicating with the outside of the rotor (14) to enable the introduction of a device, for example in the form of a key (30, 38), into the rotor (14) to actuate the control device (34).

5. Antitheft device according to claim 3 or 4, **characterised in that** the mechanical means (32) for deactivating the means (22) of interrupting the return movement of the rotor (14) comprise a toggle (42) installed in the rotor (14) and free to rotate about an axis approximately orthogonal to the directions of displacement of the electromagnet rod (26) and the control device (34), this toggle (42) comprising a first arm (42A) designed to cooperate with the control device (34) and a second arm (42B) designed to cooperate with the electromagnet rod (26).

6. Antitheft device according to claim 5, **characterised in that** the control device (34) is elastically returned to a position away from the toggle (42).

7. Antitheft device according to claim 5 or 6, **characterised in that** the rotor (14) comprises a tubular device (16), delimiting the housing (36) of the control device (34) provided with a distal end (16D) fixed in rotation to a disk (18) supporting the toggle (42), and a proximal end (16P) supporting a control button (20) for controlling the rotor (14).

8. Antitheft device according to claims 4 and 7 combined, **characterised in that** the control button (20) is provided with an approximately axial drilling (40) for the actuation device (38) of the control device (34) to pass through.

9. Antitheft device according to any one of the previous claims, **characterised in that** the rotor (14) can be moved between the "stop" position and a second extreme angular position called the "start" position, since the rotor (14) can be placed in an intermediate angular position called the "On" position between its "stop" and "start" positions, the "non-return" position being located between the "stop" and "On" positions.

## Patentansprüche

1. Diebstahlsicherung für ein Kraftfahrzeug umfassend:
- einen Stator (12),
- einen zwischen einer ersten Winkelendstellung, "Stoppstellung" genannt, und einer zweiten Winkelstellung drehbar gelagerten Rotor (14), und
- Mittel (22) zum Unterbrechen der Rückdrehbewegung des Rotors (14) von der zweiten Stellung in die "Stoppstellung", in einer zwischen der zweiten Stellung und der "Stoppstellung" winklig zwischengeschalteten Rücklaufsperrstellung, wobei diese Unterbrechungsmittel (22) elektrisch deaktiviert sind,
- mechanische Mittel (32) zum Deaktivieren der Mittel (22) zum Unterbrechen der Ruckdrenbewegung des Rotors (14),
**dadurch gekennzeichnet, dass** die mechanischen Mittel (32) zum Deaktivieren der Mittel (22) zum Unterbrechen der Rückdrehbewegung des Rotors (14) von dem Rotor (14) getragen werden.

2. Diebstahlsicherung nach Anspruch 1, **dadurch gekennzeichnet, dass** die Mittel (22) zum Unterbrechen der Rückdrehbewegung des Rotors (14) zusätzliche Anschläge (28, 26) zum Unterbrechen der Bewegung umfassen, die jeweils vom Rotor (14) und einem verschiebbaren Stift (26) eines vom Stator (12) getragenen Elektromagneten (24) getragen werden.

3. Diebstahlsicherung nach Anspruch 1 und 2 zusammen, **dadurch gekennzeichnet, dass** die mechanischen Mittel (32) zum Deaktivieren der Mittel (22) zum Unterbrechen der Rückdrehbewegung des Rotors (14) ein Bedienteil (34) umfassen, das im Rotor (14) im Wesentlichen parallel zum Stift (26) des Elektromagneten verschiebbar angeordnet ist.

4. Diebstahlsicherung nach Anspruch 3, **dadurch gekennzeichnet, dass** das Bedienteil (34) in einer im Wesentlichen axialen Aufnahme (36) im Rotor angeordnet ist, wobei die Aufnahme (36) zur Einführung in den Rotor (14) eines Betätigungsglieds zum Betätigen des Bedienteils (34), das beispielsweise als Schlüssel (30, 38) ausgebildet sein kann, mit der Außenfläche des Rotors (14) kommuniziert.

5. Diebstahlsicherung nach Anspruch 3 oder 4, **dadurch gekennzeichnet, dass** die mechanischen Mittel (32) zum Deaktivieren der Mittel (22) zum Unterbrechen der Rückdrehbewegung des Rotors (14) eine Wippe (42) umfassen, die im Rotor (14) um eine Achse angelenkt ist, die im Wesentlichen orthogonal zu den Bewegungsrichtungen des Elektromagnet-Stiftes (26) und des Bedienteils (34) verläuft, wobei die Wippe (42) einen mit dem Bedienteil (34) zusammenwirkenden ersten Arm (42A) und einen mit dem Elektromagnet-Stift (26) zusammenwirkenden zweiten Arm (42B) aufweist.

6. Diebstahlsicherung nach Anspruch 5, **dadurch gekennzeichnet, dass** das Bedienteil (34) in Richtung einer von der Wippe (42) entfernten Stellung elastisch vorgespannt ist.

7. Diebstahlsicherung nach Anspruch 5 oder 6, **dadurch gekennzeichnet, dass** der Rotor (14) ein die Aufnahme (36) des Bedienteils (34) begrenzendes rohrförmige Teil (16) umfasst, das ein drehfest mit einer die Wippe (42) tragenden Scheibe (18) verbundenes entferntes Ende (16D) und eine Taste (20) zum Betätigen des Rotors (14) tragendes nahes Ende (16P) aufweist.

8. Diebstahlsicherung nach Anspruch 4 und 7, **dadurch gekennzeichnet, dass** die Betätigungstaste (20) eine im Wesentlichen axiale Bohrung (40) zum Durchführen des Betätigungsgliedes (38) des Bedienteils (34) aufweist.

9. Diebstahlsicherung nach einem der vorhergehenden Ansprüche, **dadurch gekennzeichnet, dass** der Rotor (14) zwischen einer "Stoppstellung" und einer zweiten Winkelendstellung, "Startstellung" genannt, verstellbar ist, wobei der Rotor (14) zwischen seiner "Stoppstellung" und seiner "Startstellung" in eine Winkelzwischenstellung, "Betriebsstellung" genannt, überführt werden kann, wobei sich die "Rücklaufsperrstellung" zwischen der Stoppstellung und der Betriebsstellung" befindet.
